# EUROPÄISCHE PATENTANMELDUNG

(11) **EP 0 563 449 A1**
(43) Veröffentlichungstag der Anmeldung: **06.10.1993**
(21) Anmeldenummer: 92120714.8
(22) Anmeldetag: 04.12.1992
(51) Int. Cl.: H05K 7/18, H05K 9/00, H02B 1/30

(54) **Gehäuse, insbesondere Kabelverzweigergehäuse**

(30) Priorität: 29.02.1992 DE 4206682
(71) Anmelder: KRONE Aktiengesellschaft, D-14167 Berlin (DE)
(72) Erfinder: Käufer, Helmut, Prof.Dr., W-4020 Mettmann (DE); Grimm, Maximilian, W-2000 Hamburg 63 (DE); Angelo, Polese, W-1000 Berlin 21 (DE); Staudte, Bernd, Dr. sc. ind., W-1000 Berlin 19 (DE); Struck, Detlef, Dipl.-Ing., W-1000 Berlin 45 (DE); Radelow, Wolfgang, W-1000 Berlin 47 (DE); Permin, Hans-Joachim, Dipl.-Ing., W-1000 Berlin 25 (DE)

(57) **Zusammenfassung**

Die Erfindung bezieht sich auf ein Gehäuse (1), insbesondere Kabelverzweigergehäuse zur Aufnahme und Verteilung von Lichtwellenleitern für die Telekommunikation und der Niederspannungsverteilung. Aufgabe der Erfindung ist es, ein Gehäuse dieser Art zu schaffen, das modular aufgebaut und gegen die Umwelt ausreichend abgedichtet ist und mit dem eine unkomplizierte und servicefreundliche Arbeit gewährleistet ist.

Zur Lösung dieser Aufgabe sieht die Erfindung vor, daß die Seitenwände aus mindestens zwei sich kastenartig gegenüberstehenden L-förmigen Segmenten (11,12) mit einer an der einen Längskante angeordneten Nut (8) und einer an der anderen Längskante angeordneten Feder (9) ausgebildet sind, daß das Abdeck- und das Bodenelement einen Nut- (8) und einen Federbereich (9) zur Verbindung mit den L-förmigen Segmenten aufweisen, und daß die L-förmigen Segmente mit dem Abdeck- und dem Bodenelement derart miteinander verbindbar sind, daß eine bewegliche Türseite (11) und eine feststehende Rückwandseite (12) gebildet sind. Es können dadurch am Montageort des Gehäuses entsprechend den örtlichen Einsatzbedingungen die Größe des Gehäuses und auch die Zugangsseite bestimmt werden.

## Beschreibung

Die Erfindung bezieht sich auf ein Gehäuse, insbesondere Kabelverzweigergehäuse zur Aufnahme und Verteilung von Kabeln, insbesondere Lichtwellenleitern, für die Telekommunikation und die Niederspannungsverteilung.

Die Verzweigung und Verteilung von Leitungen der Telekommunikation in Kabelverzweigergehäusen ist bekannt. Ein Gehäuse der gattungsgemäßen Art ist in der DE-PS 23 20 268 beschrieben. Das Kabelverzweigergehäuse aus glasfaserverstärktem Kunststoff oder Verbundmaterial besteht aus zwei Seitenwänden, einer Tür, einer Rückwand, einem Fronttürrahmen und einem Dach. Die Bauteile sind durch von innen angebrachte Schrauben miteinander verbunden. Zwischen Sockel und Gehäuse ist ein Gestellrahmen angeordnet. Die Tür ist auf einer Seite mit zwei Schwenkscharnieren angeschlagen und mit einem zweiseitigen Stangenschubschloß versehen. Die Abdichtung erfolgt über eingelegte Gummidichtstreifen und durch die Sandwichbauweise.

Nachteilig ist es bei dieser Bauweise, daß bei einer Beschädigung des Gehäuses eine aufwendige Demontage erfolgen muß. Wegen der fehlenden Reparaturmöglichkeit von der Rückseite her ist das Gehäuse wenig servicefreundlich. Das Gehäuse besitzt ein hohes Eigengewicht und ein zu hohes Preis-Leistungsverhältnis. Ferner gibt es keine Sollbruchstelle zwischen dem Gestell und dem Gehäuseoberteil.

In der DE-OS 35 24 539 wird ein Gehäuse beschrieben, das in seiner Diagonalen in zwei annähernd gleich große Teile zerlegt werden kann. Das Gehäuse ist über Laschen vom Sockel lösbar.

In den DE-GM 84 36 325 und DE-GM 84 36 323 werden Kabelverzweigergehäuse beschrieben, die unterschiedliche Türkonstruktionen und Maßnahmen zur Abdichtung aufweisen.

Bei allen vorbekannten Gehäusen, insbesondere Kabelverzweigergehäusen, ist es jedoch nachteilig, daß kein modularer Aufbau des Gehäuses in definierten Höheneinheiten möglich ist, so daß bei Teilauslastungen unerwünschter Leerraum auftritt. Alle Gehäuse sind unzureichend abgedichtet und wenig servicefreundlich, da keine ausreichende Zugänglichkeit zu den Einbauteilen besteht. Die Gehäuse besitzen schließlich keine Sollbruchstelle zur Schadensbegrenzung im Falle großer Krafteinwirkungen.

Der Erfindung liegt von daher die Aufgabe zugrunde, ein Gehäuse, insbesondere Kabelverzweigergehäuse, der gattungsgemäßen Art zu schaffen, das modular aufgebaut und gegen die Umwelt ausreichend abgedichtet ist, mit dem eine unkomplizierte und servicefreundliche Arbeit gewährleistet ist und bei dem eine Sollbruchstelle eine Zerstörung des Gehäuses durch äußere Kräfte weitgehend verhindert.

Zur Lösung dieser Aufgabe sieht die Erfindung vor, daß die Seitenwände des Gehäuses aus mindestens zwei sich gegenüberstehenden L-förmigen Segmenten mit einer an der einen Längskante ausgebildeten Nut und einer an der jeweils anderen Längskante ausgebildeten Feder gebildet sind. Das längsgeteilte Bodenelement enthält auf jeder Hälfte einen Nut- und einen Federbereich zur Aufnahme der L-förmigen Segmente. Es können dadurch am Montageort des Gehäuses, entsprechend den örtlichen Einsatzbedingungen, die Größe des Gehäuses und auch die Zugangsseite bestimmt werden. Je nach dem wie die L-förmigen Segmente auf das Bodenelement gebracht werden, entsteht eine feststehende Rückwandseite und eine bewegliche Türseite. Durch die feste Montage des Bodenelementes auf den Sockel entsteht auf der Bodenelementehälfte mit überwiegender Nutausformung die feste Rückwandseite, und auf der Bodenelementehälfte mit überwiegender Federausformung entsteht die bewegliche Türseite. Alle L-förmigen Segmente sind so aufgebaut, daß diese über das Nut-Federsystem miteinander beliebig verbunden werden können. Das Abdeckelement ist über einen Nut- und Federbereich mit der feststehenden Rückwandseite und mit der beweglichen Türseite verbunden.

Weitere vorteilhafte Ausgestaltungen der Erfindung ergeben sich aus den Unteransprüchen.

Die Erfindung ist nachfolgend anhand eines in der Zeichnung dargestellten Ausführungsbeispieles eines Kabelverzweigergehäuses näher erläutert. Es zeigen:
- Fig. 1: Eine perspektivische Ansicht des Kabelverzweigergehäuses mit Normsockel in Explosionsdarstellung,
- Fig. 2: einen Vertikalschnitt durch das Kabelverzweigergehäuse,
- Fig. 3: eine perspektivische Ansicht eines L-förmigen Segmentes,
- Fig. 4: eine perspektivische Innenansicht eines L-förmigen Segmentes,
- Fig. 5: eine perspektivische Außenansicht eines strukturierten L-förmigen Segmentes,
- Fig. 6: eine perspektivische Ansicht eines L-förmigen Segmentes mit Steckelementen,
- Fig. 7: eine prinzipielle Draufsicht auf zwei L-förmige Segmente mit rechts angeschlagener Tür,
- Fig. 8: ein prinzipielle Draufsicht auf zwei L-förmige Segmente mit links angeschlagener Tür,
- Fig. 9: eine Schnittdarstellung der Verschlußelemente im Drehbereich des Gehäuses,
- Fig. 10: eine Draufsicht auf eine Zylindersegment mit Scharnierstange im offenen Zustand,
- Fig. 11: eine Draufsicht auf das Zylindersegment mit Scharnierstange im geschlossenen Zustand,
- Fig. 12: eine Draufsicht auf ein Zylindersegment mit Scharnierstange im offenen Zustand in einer anderen Ausführungsform,
- Fig. 13: eine perspektivische Darstellung mehrerer Zylindersegmente und der Scharnierstange,
- Fig. 14: eine Schnittdarstellung des Scharnierbereiches,
- Fig. 15: eine perspektivische Darstellung eines Bodenelementes,
- Fig. 16: eine Schnittdarstellung eines Sollbruchelementes und
- Fig. 17: eine Schnittdarstellung eines weiteren Sollbruchelementes.

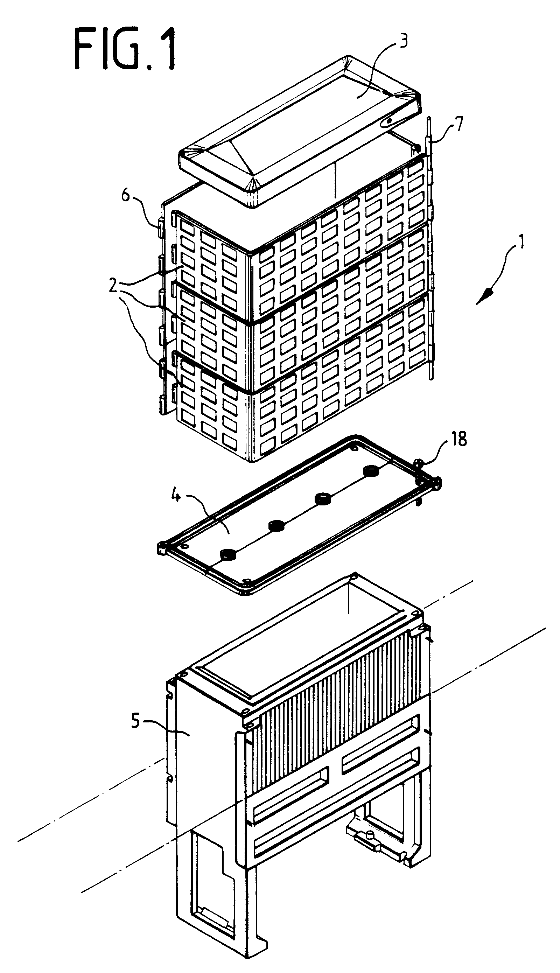

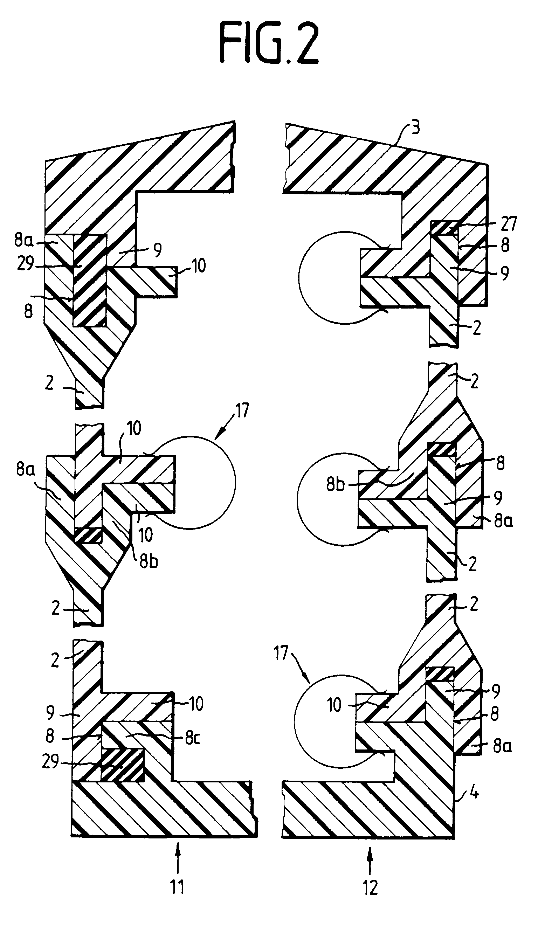

Das Kabelverzweigergehäuse 1 umfaßt mehrere L-förmige Segmente 2, ein Abdeckelement 3 und ein Bodenelement 4 und wird komplettiert durch einen aus Normteilen gebildeten Sockel 5 mit einem entweder aus Beton oder Kunststoff gefertigten und in das Erdreich eingebrachten Fußteil (Fig.1). Die einzelnen Bauteile des Gehäuses 1 sind über ein Nut-Feder-System 8,9 miteinander verbunden, das sowohl Verbindungs- und Befestigungsfunktionen, als auch Abdichtfunktionen ausübt (Fig. 2).

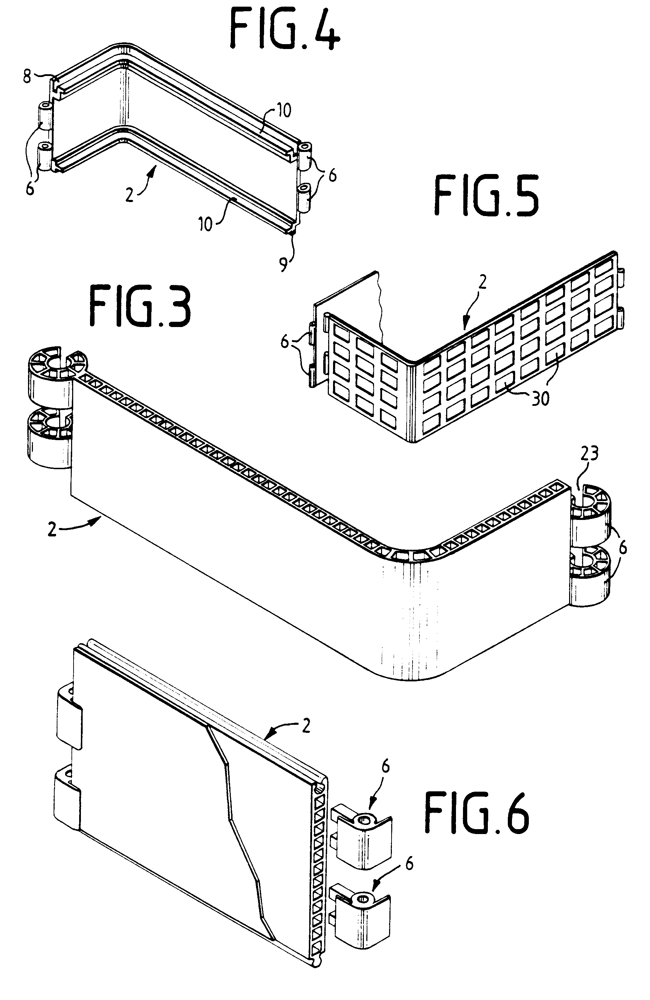

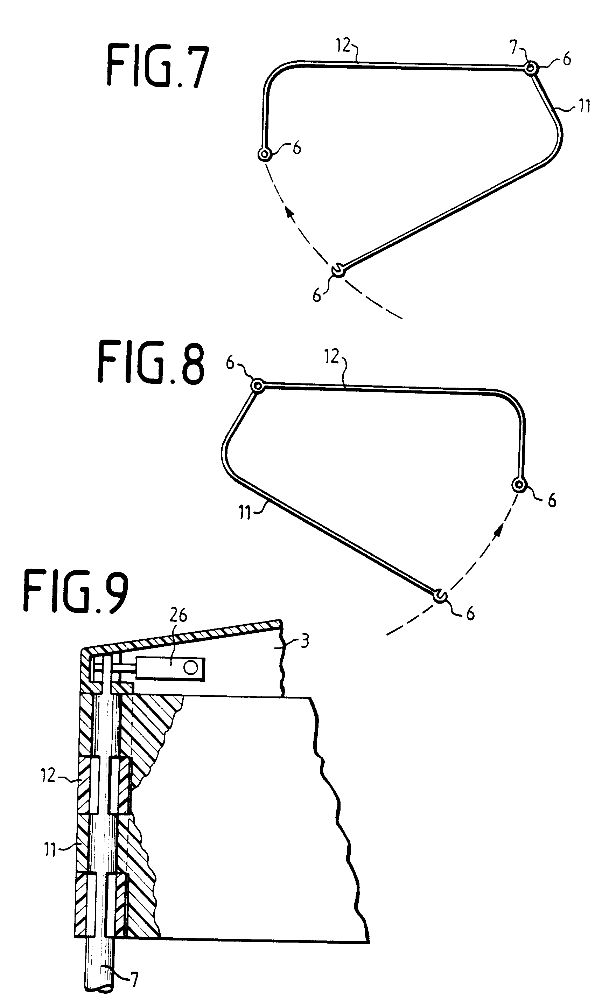

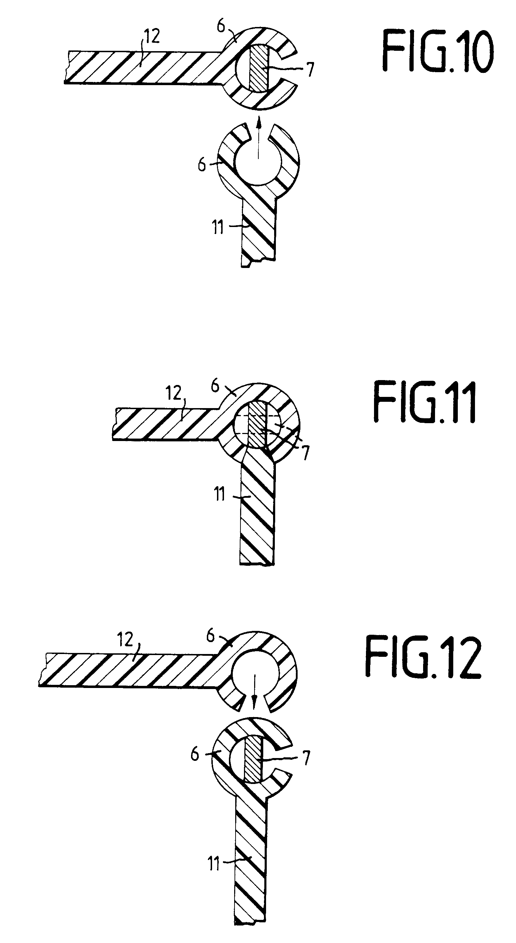

Die L-förmigen Segmente 2 sind miteinander sowie mit dem Abdeckelement 3 und dem Bodenelement 4 über ein Verschlußsystem verbunden, das aus Zylindersegmenten 6 und zugehörigen Scharnierstangen 7 gebildet ist (Fig. 7 bis 10). Die einzelnen vertikal übereinander angeordneten Segmente 2 des Gehäuses 1 werden durch Verbindungselemente 17, die durch Federringe gebildet sind, zusammengepreßt (Fig. 2). Das gewählte Verschlußsystem erlaubt es in Verbindung mit dem Nut-Feder-System 8,9, daß das Gehäuse 1 am Aufstellungsort so ausgebildet ist, daß es den dortigen Bedingungen bezüglich der Zugänglichkeit, des Einbauvolumens und der allgemeinen Servicebedingungen optimal entspricht. Die bewegliche Türseite 11 und die feststehende Rückwandseite 12 sind am Aufstellungsort frei bestimmbar. Der modulare Aufbau und die flexible Gestaltungsmöglichkeit des Gehäuses 1 ergeben sich u.a. aus der konstruktiven Gestaltung der L-förmigen Segmente 2. Aus der Darstellung in den Figuren 3 bis 6 ist ersichtlich, daß die L-förmigen Segmente 2 an ihren oberen und unteren Längskanten jeweils eine Nut 8 oder eine Feder 9 aufweisen, um ein horizontales (seitliches) Verschieben der Segmente 2 zu unterbinden. Dabei ist die Nut 8 so ausgebildet, daß der jeweils ein Wandteil des Segmentes 2 bildende Nutschenkel 8a langer ist als der innenliegende Nutschenkel 8b ( Fig.2 ). Die feste Verbindung zwischen den Segmenten 2 in der vertikalen Ebene wird durch horizontale Rippen 10 erzeugt, die an den Nuten 8 und an den Federn 9 vorgesehen sind (Fig. 4). Diese liegen beim Zusammenstecken von zwei Segmenten 2 parallel aufeinander und stehen zur Segmentwand im rechten Winkel. Bei der Montage werden über diese Rippen 10 die Verbindungselemente 17 in Form von Federringen geschnappt, die ein Auseinanderbewegen der Segmente 2 verhindern (Fig. 2).

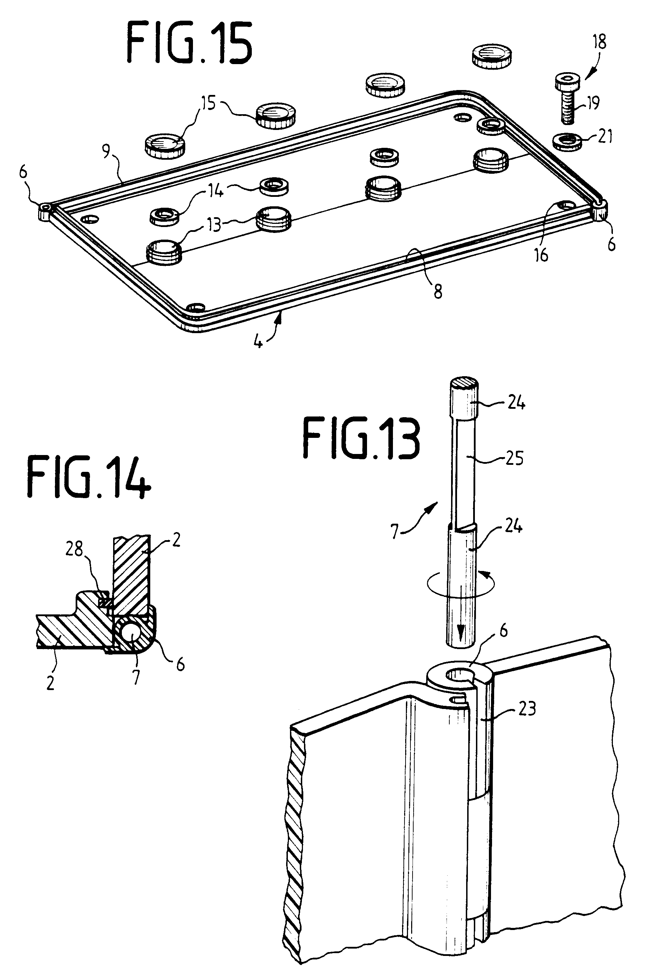

Ein solches Nut-Feder-System 8,9 weist auch das längsgeteilte Bodenelement 4 auf, wobei jede Hälfte sowohl eine Nut- als auch eine Feder 8 bzw. 9 enthält (Fig. 15). Dabei ist in den beiden Hälften des Bodenelementes 4 einmal die Nut 8 und einmal die Feder 9 dominierend.Die Nut 8 der Hälfte des Bodenelementes 4 mit überwiegender Nutausbildung ist nach vorne offen gestaltet und bildet mit der Feder 9 des Segmentes 2 einen Anschlag , der mittels des Anschlag-Dichtgummis 29 gegen äußere Einflüsse abgedichtet ist. Die Feder 9 der Hälfte des Bodenelementes 4 mit überwiegender Federausbildung ist wie die Feder 9 der Segmente 2 ausgebildet und greift in die Nut 8 des darüberliegenden Segmentes 2 ein. Die Hälfte des Bodenelementes 4 mit dem überwiegenden Nutbereich nimmt die feststehende Rückwand 12 auf. Die Hälfte des Bodenelementes 4 mit dem überwiegenden Federbereich nimmt die bewegliche Türseite 11 auf (Fig. 2). Die beiden Hälften des Bodenelementes 4 sind durch Verbindungselemente, z.B. mittels nicht dargestellter Zapfen und Nut verbunden.

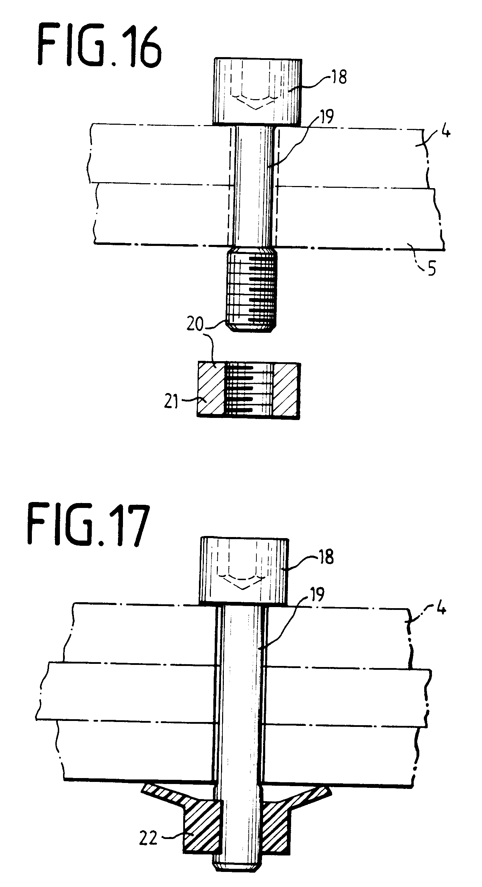

Die Kabeldurchführungen sind durch geteilte Gewindestutzen 13 mit konischem Einlauf gebildet. Zum Abdichten dienen ein geschlitzter Dichtgummi 14 und zum Verschließen und Verspannen ein radial zu öffnender Verschlußring 15. In den vier Ecken des Bodenelementes 4 sind die nicht dargestellten Lager für die Scharnierstangen 7 angeordnet und des weiteren Bohrungen 16 vorgesehen, die zur Befestigung des Gehäuses 1 über das Bodenelement 4 an den Normsockel 5 mit dem Gestell dienen (Fig. 1,15). Die Verbindung des Gehäuses 1 über das Bodenelement 4 mit dem Sockel 5 mit Gestell erfolgt über die Sollbruchelemente 18, mit denen eine feste, aber lösbare Verbindung hergestellt wird, die bei kritischer Belastung bricht, um die Zerstörung des Gehäuses 1 und/oder des Sockels 5 zu vermeiden. Das Sollbruchverbindungselement 18 besteht aus einem Bolzen 19 aus Kunststoff und einem Verschlußstück 20, das aus einem Gewindeabschnitt auf dem Bolzen 19 und aus einer Mutter 21 oder einem Schnellverschluß 22 gebildet wird (Fig.16,17). Das Sollbruchelement 18 ist leicht zu ersetzen.

Die bewegliche Verbindung der L-förmigen Segmente 2 ist durch das Verschlußsystem realisiert. Wie es in den Figuren 3 und 7 bis 13 dargestellt ist, sind an den beiden Schmalseiten der L-förmigen Segmente 2 jeweils zwei Zylindersegmente 6 asymmetrisch vertikal übereinander so angeordnet, daß sie beim Zusammenfügen von zwei Segmenten 2 sich vertikal miteinander verzahnen (Fig. 3 und 5). Die Zylindersegmente 6 können auch als Steckelemente ausgebildet sein (Fig. 6). Durch die Innenbohrung der verzahnten Zylindersegmente 6 ist die Scharnierstange 7 geführt, die eine horizontale Verschiebung der Segmente 2 verhindert. Zum Verschließen bzw. Arretieren der Segmente 2 sind die Zylindersegmente 6 in Verbindung mit der Scharnierstange 7 als Scharnierschloß ausgebildet (Fig. 9 bis 12). Dazu sind die Zylindersegmente 6 mit einem durchgehenden Längsschlitz 23 versehen, dessen Breite kleiner ist als der Bohrungsdurchmesser des Zylindersegmentes 6 und der sich nach vorne kegelförmig öffnet (Fig. 3 und 10 bis 12). Die Längsschlitze 23 sind an den Zylindersegmenten 6 wechselseitig so angeordnet, daß sie auf der Seite des langen Schenkels der L-förmigen Segmente 2 innenseitig und jeweils senkrecht zur Seitenwand und auf der Seite des kurzen Schenkels der L-förmigen Segmente 2 stirnseitig senkrecht in paralleler Fortsetzung zur Seitenwand ausgeführt sind. Die Scharnierstange 7 ist im gleichen Intervall wie die Anordnung der Zylindersegmente 6 als Zylinderstababschnitt 24 und als Rechteckstababschnitt 25 ausgebildet (Fig. 13). Die Abmessungen des Rechteckprofils des Rechteckstababschnittes 25 der Scharnierstange 7 entsprechen dem Bohrungsdurchmesser des Zylindersegmentes 6 und der Breite des Längsschlitzes 23. Beim Schließvorgang werden die Zylindersegmente 6 miteinander verzahnt, wobei die Scharnierstange 7 sich mit ihren Zylinderstababschnitten 24 in den Bohrungen eines Teiles der Zylindersegmente 6 befindet und mit den Rechteckstababschnitten 25 in die Längsschlitze 23 der gegenüberliegenden übrigen Zylindersegmente 6 geführt ist. Durch ein Verdrehen der Scharnierstange 7 um z.B. 90° wird ein Formschluß erreicht und die Schließelemente arretieren das Scharnier (Fig. 11). Die Scharnierstange 7 ist im Bodenelement 4 und im Abdeckelement 3 geführt. Der Mechanismus zum Verdrehen der Scharnierstange 7 ist im Abdeckelement 3 eingebracht, wie es die Figur 9 zeigt, und besteht aus einem Hebel mit Schließzylinder 26, der formschlüssig mit der Scharnierstange 7 verbunden ist.

Das als Dach fungierende Abdeckelement 3 ist spitz ausgeführt, wie in der Figur 1 dargestellt ist, um ein Daraufsteigen oder -setzen zu verhindern und um das Ablaufen von Regenwasser zu unterstützen. Das Abdeckelement 3 kann aber auch eine sphärische Wölbung oder eine ansteigende Dachschräge aufweisen, die einen Winkel zwischen 90° und 170° bildet. Die erforderliche Abdichtung des Gehäuses 1 wird durch das beschriebene Nut-Feder-System 8,9 und durch das Einbringen von Profildichtungen 27 erreicht. Die Dichtung in den Nut-und Federbereichen wird durch umlaufendes Dichtungsgummi oder mit Dichtungsmasse erreicht (Fig. 2). Im Scharnierbereich wird die Dichtung durch eine Gummidichtung 28 in einem längslaufenden Nutprofil, wie es die Figur 11 zeigt, erreicht. Die Türdichtung am Dachanschlag (Fig. 2, 9) ist über einen Anschlag-Dichtgummi 29, der sich in einer Nut befindet, realisiert.Das Abdeckelement 3 weist auf der Türseite 11 eine Feder 9 auf , die mit dem Anschlag-Dichtgmmmi 29 , welcher sich in der Nut 8 des darunterliegenden Segmentes 2 befindet, und mit dem längeren Schenkel 8a der Nut 8 dieses Segmentes 2 , einen abgedichteten Anschlag bildet. Im Rückwandbereich ist das Abdeckelement 3 mit der Nut 8 in den Abmessungen der Nut 8 der Segmente 2 versehen, in welche die Feder 9 des darunterliegenden Segmentes 2 eingreift. Das gleiche Dichtungsprinzip ist bei der Türdichtung im Bodenelement 4 angewendet.

Die werkstoffmäßige Beschaffenheit des Gehäuses 1 richtet sich nach dem Fertigungsverfahren, dem Umweltschutz (Recycling-Fähigkeit), der notwendigen Wärmedämmung und dem Gewicht.

Vorgeschlagen werden daher für die Herstellung der L-förmigen Segmente 2 die folgenden Werkstoffkombinationen:
1. Verzinktes Stahlblech von 0,8 mm Dicke durch Sicken versteift
2. Stegplatten-Konstruktion aus PP oder PC mit einer Dicke von 10 mm und Edelstahl-Außenplatten 0,3 bis 0,5 mm
3. Sandwich-Konstruktion mit Edelstahl-Blech und Schaumkern ( PC, Glasschaum )
4. Thermoplastischer Spritzguß mit PC, Dicke 0,8 mm
5. Zweischalen-Bauweise mit Hohlkammerelementen, PP-Spritzguß
Die Segmente 2 sind im Ausführungsbeispiel im thermoplastischen Spritzguß hergestellt und durch Versteifungssicken 30 und -rippen 31 stabilisiert, wie es in den Figuren 2 und 5 dargestellt ist. Diese Versteifungselemente 30 können unterschiedlichste geometrische Ausformungen aufweisen.

Im Gehäuse 1 ist ein nicht dargestelltes Rangiergestell vorgesehen, das aus einem in der Höhe verstellbarem Profilblechportal und wahlweise aus horizontalen sowie vertikalen Querstreben besteht. Durch die Portalbauweise sind die eingebrachten Bauelemente von vorne und von hinten zugänglich.

| **BEZUGSZEICHENLISTE** | | | |
|---|---|---|---|
| 01 | Kabelverzweigergehäuse | 24 | Zylinderstababschnitt |
| 02 | L-förmiges Segment | 25 | Rechteckstababschnitt |
| 03 | Abdeckelement | 26 | Hebel mit Schließzylinder |
| 04 | Bodenelement | 27 | Profildichtungen |
| 05 | Sockel | | |
| 06 | Zylindersegmente | 28 | Gummidichtung |
| 07 | Scharnierstange | 29 | Anschlagdichtgummi |
| 08 | Nut | 30 | Versteifungssicken |
| 08a bis 08 c | Nutschenkel | | |
| 09 | Feder | 31 | Versteifungsrippen |
| 10 | Rippen | | |
| 11 | Türseite | | |
| 12 | Rückwandseite | | |
| 13 | Gewindestutzen | | |
| 14 | Dichtgummi | | |
| 15 | Verschlußring | | |
| 16 | Bohrungen | | |
| 17 | Verbindungselement | | |
| 18 | Sollbruchelement | | |
| 19 | Bolzen | | |
| 20 | Verschlußstück | | |
| 21 | Mutter | | |
| 22 | Schnellverschluß | | |
| 23 | Längsschlitz | | |

## Patentansprüche

1. Gehäuse, insbesondere Kabelverzweigergehäuse zur Aufnahme und Verteilung von Lichtwellenleitern für die Telekommunikation und Niederspannungsverteilung, bestehend aus Seitenwänden sowie Abdeck-und Bodenelementen,
**dadurch gekennzeichnet,**
daß die Seitenwände aus mindestens zwei sich kastenartig gegenüberstehenden L-förmigen Segmenten ( 2 ) mit einer an der einen Längskante angeordneten Nut ( 8 ) und einer an der anderen Längskante angeordneten Feder ( 9 ) ausgebildet sind, daß das Abdeckelement ( 3 ) und das Bodenelement ( 4 ) einen Nut- und einen Federbereich zur Verbindung mit den L-förmigen Segmenten ( 2 ) aufweisen, und daß die L-förmigen Segmente ( 2 ) mit dem Abdeck- und dem Bodenelement ( 3 bzw. 4 ) derart miteinander verbindbar sind, daS eine bewegliche Türseite ( 11 ) und eine feststehende Rückwandseite ( 12 ) gebildet sind.

2. Gehäuse nach Anspruch 1, dadurch gekennzeichnet, daß an den Nuten ( 8 ) und an den Federn ( 9 ) horizontale Rippen ( 10 ) vorgesehen sind , die beim Zusammenstecken von zwei L-förmigen Segmenten ( 2 ) parallel aufeinanderliegen und im rechten Winkel zur Wand der L-förmigen Segmente ( 2 ) stehen, und daß der eine Nutschenkel ( 8a ) länger ausgebildet ist als der Nutschenkel ( 8b ) mit der horizontalen Rippe ( 10 ).

3. Gehäuse nach Anspruch 2, dadurch gekennzeichnet, daß die horizontalen Rippen ( 10 ) von jeweils zwei L-förmigen Segmenten ( 2 ) mittels eines kraftschlüssigen Verbindungselementes ( 17 ) zusammengepreßt sind.

4. Gehäuse nach den Ansprüchen 1 bis 3, dadurch gekennzeichnet, daß die feststehende Rückwandseite ( 12 ) durch Eingreifen der Feder ( 9 ) des oberen Segmentes ( 2 ) in die Nut ( 8 ) des Abdeckelementes ( 3 ) und durch Eingreifen der Feder ( 9 ) des Bodenelementes ( 4 ) in die Nut ( 8 ) des darüberliegenden Segmentes ( 2 ) gebildet ist , und daß die bewegliche Türseite ( 11 ) durch den Anschlag des längeren Nutschenkels ( 8a ) des oberen Segmentes ( 2 ) über den in dessen Nut ( 8 ) angeordneten Anschlag-Dichtgummi ( 29 ) an die Feder ( 9 ) des Abdeckelementes ( 3 ) und durch den Anschlag der Feder ( 9 ) und der Rippe ( 10 ) des unteren Segmentes ( 2 ) an die nach außen offene Nut ( 8 ) des Bodenelementes ( 4 ) , in die der Anschlag-Dichtgummi ( 29 ) eingebracht ist , und dem Nutschenkel ( 8c ) des Bodenelementes ( 4 ) gebildet ist.

5. Gehäuse nach Anspruch 1, dadurch gekennzeichnet, daß an den beiden Seitenkanten der L-förmigen Segmente ( 2 ) zwei Zylindersegmente ( 6 ) vertikal so asymmetrisch angeordnet sind, daß diese beim Zusammenfügen von zwei der L-förmigen Segmente ( 2 ) miteinander verzahnt sind, und daß eine Scharnierstange ( 7 ) in die Zylindersegmente ( 6 ) eingeführt und in das Abdeck- und in das Bodenelement ( 3,4 ) integriert ist.

6. Gehäuse nach den Ansprüchen 1 und 5, dadurch gekennzeichnet, daß Zylindersegmente ( 6 ) als Steckelemente in die Seitenkanten der L-förmigen Segmente ( 2 ) eingebracht sind.

7. Gehäuse nach den Ansprüchen 1 bis 6, dadurch gekennzeichnet daß, die Zylindersegmente ( 6 ) durchgehende Längsschlitze ( 23 ) aufweisen, deren Breite kleiner ist als der Bohrungsdurchmesser der Zylindersegmente ( 6 ), die wechselseitig so angeordnet sind, daß sie jeweils innenseitig senkrecht zur Seitenwand auf der Seite des langen Schenkels des L-förmigen Segmentes ( 2 ) und stirnseitig in paralleler Fortsetzung senkrecht zum kurzen Schenkel des L-förmigen Segmentes ( 2 ) angebracht sind, und daß die Scharnierstange ( 7 ) im gleichen Intervall wie die Zylindersegmente ( 6 ) in einem Stück einmal als Zylinderstababschnitt ( 24 ) und zum anderen als Rechteckstababschnitt ( 25 ) ausgebildet ist, wobei die Maße des Rechteckstababschnittes ( 25 ) dem Bohrungsdurchmesser der Zylindersegmente ( 6 ) und der Breite des Längsschlitzes (23) entsprechen, wobei beim Schließvorgang die Scharnierstange (7) in den Zylindersegmenten ( 6 ) mit den Zylinderstababschnitten ( 24 ) verbunden ist und in den Zwischenräumen die Rechteckstababschnitte ( 25 ) sind, und daß zum Verdrehen der Scharnierstange ( 7 ) im Abdeckelement ( 3 ) ein Hebel mit Schließzylinder ( 26 ) angeordnet ist, der mit der Scharnierstange (7) formschlüssig verbunden ist.

8. Gehäuse nach den Ansprüchen 1 bis 7, dadurch gekennzeichnet, daß eine Vielzahl von L-förmigen Segmenten (2) parallel übereinander angeordnet und über das Nut-Feder-System ( 8,9 ) sowie über die Zylindersegmente ( 6 ) und die Scharnierstange ( 7 ) miteinander verbunden sind.

9. Gehäuse nach den Ansprüchen 1 bis 8, dadurch gekennzeichnet, daß zwischen den L-förmigen Segmenten ( 2 ) im Nut-und Federbereich ( 8,9 ) umlaufende Dichtelemente (27,28) vorgesehen sind, welche im Scharnierbereich in einem längslaufenden Nutprofil und im Türbereich am Abdeckelement ( 3 ) und Bodenelement ( 4 ) als Anschlagdichtung ( 29 ) in einer Nut ausgebildet sind.

10. Gehäuse nach Anspruch 1, dadurch gekennzeichnet, daß die Nuten ( 8 ) und Federn ( 9 ) an den Kanten der L-förmigen Segmente ( 2 ) als Nut-und Feder-Stecksystem ausgebildet sind.

11. Gehäuse nach den Ansprüchen 1 bis 10, dadurch gekennzeichnet, daß die L-förmigen Segmente ( 2 ) Versteifungssicken und- Rippen ( 3 ) aufweisen.

12. Gehäuse nach den Ansprüchen 1 bis 11, dadurch gekennzeichnet, daß die L-förmigen Segmente ( 2 ) aus Polycarbonat, SMC oder Duroplast in Doppelsteg-Platten-Bauweise mit Sandwichaufbau aus eingebrachten Glasschaum-Segmenten, Kunststoff-Wabenprofilplatten gefertigt sind.

13. Gehäuse nach den Ansprüchen 1 bis 12, dadurch gekennzeichnet, daß in die L-förmigen Segmente ( 2 ) Metallprofile eingegossen sind und eine 0,2 bis 0,5 mm dünne Außenmetall-Verkleidung aufgebracht ist, die mit einem umweltresistenten Lack oder einer Kunststoff-Beschichtung versehen ist.

14. Gehäuse nach Anspruch 1, dadurch gekennzeichnet, daß das Bodenelement ( 4 ) Bohrungen ( 16 ) zur Aufnahme von Sollbruchelementen ( 18 ) aufweist, welche gleichzeitig die Befestigungselemente für die Verbindung mit dem Normsockel (5) mit Gestell darstellen.

15. Gehäuse nach Anspruch 14 , dadurch gekennzeichnet, daß die Sollbruchelemente ( 18 ) aus einem Kunststoffbolzen ( 19 ) mit einem höhenverstellbaren Verschlußstück ( 20 ) bestehen.

16. Gehäuse nach Anspruch 15 , dadurch gekennzeichnet, daß das Verschlußstück ( 20 ) aus einem auf dem Kunststoffbolzen ( 19 ) befindlichen Gewinde und einer Mutter ( 21 ) oder einem Schnellverschluß ( 22 ) gebildet ist.
